# EUROPEAN PATENT APPLICATION

(11) **EP 3 926 338 A1**
(43) Date of publication of application: **22.12.2021**
(21) Application number: 20755111.0
(22) Date of filing: 10.02.2020
(51) Int. Cl.: G01N 27/327, G01N 27/416, G01N 33/72

(54) **BIOSENSOR**

(30) Priority: 15.02.2019 JP 2019026105
(71) Applicant: PHC Holdings Corporation, Tokyo 105-8433 (JP)
(72) Inventor: HAYASHINO Nao, Toon-shi, Ehime 791-0395 (JP); OOTANI Shingo, Toon-shi, Ehime 791-0395 (JP)
(74) Representative: Vigand, Philippe
(86) International application number: PCT/JP2020/005046
(87) International publication number: WO 2020/166545

(57) **Abstract**

A biosensor includes: a base plate; an electrode layer located on a major surface of the base plate and including a first electrode pair; a spacer plate provided on the electrode layer, the spacer plate having a first opening and at least one partition located in the first opening and connected with a periphery of the first opening at one end so as to divide part of the first opening into two or more portions; a first reagent layer provided in each of the two or more portions of the first opening; and a cover plate having an entrance section including at least one entrance opening and provided on the spacer plate, the entrance section overlapping at least part of the first opening, wherein part of the first electrode pair is located in the two or more portions of the first opening of the spacer plate.

## Description

### TECHNICAL FIELD

The present application relates to a biosensor for measuring the concentration of a specific substance contained in a specimen.

### BACKGROUND ART

Biosensors have been put into practical use in various fields including the fields of medical and clinical examinations and pharmaceutical fields. For example, biosensors for measurement of the concentration of various substances in blood have been put into practical use and widely used in the fields of medical and clinical examinations.

Patent Document No. 1 discloses a sensor with microchannels which can be used as an electrochemical blood test strip for blood clotting measurement or the like. This microfluidic sensor has a channel which has branches through which a fluid under measurement is caused to flow by capillary action and an electrode pair provided in reaction zones located at the terminal ends of the two branched channels. Patent Document No. 2 discloses a biosensor which includes a filter for filtering a specimen at the entrance side.

### CITATION LIST

### PATENT LITERATURE

Patent Document No. 1: Japanese Patent Publication No. 2015-108622
Patent Document No. 2: Japanese Patent Publication No. 2002-202283

### SUMMARY OF INVENTION

### TECHNICAL PROBLEM

Some biosensors are required to have higher measurement accuracy. The present disclosure provides a biosensor which can achieve high measurement accuracy.

### SOLUTION TO PROBLEM

A biosensor of one embodiment of the present disclosure includes: a base plate having a major surface; a cover plate having an entrance section including at least one entrance opening; at least one partition located in the first measurement space so as to divide part of the first measurement space into two or more portions; at least one electrode layer located between the base plate or the cover plate and the first measurement space, the electrode layer including a first electrode pair including a working electrode and a counter electrode, part of the first electrode pair being located in the two or more portions of the first measurement space; and a first reagent layer containing a first reagent capable of reacting with a specimen, the first reagent layer being located in the two or more portions of the first measurement space.

### ADVANTAGEOUS EFFECTS OF INVENTION

According to a biosensor of the present disclosure, the probability of formation of bubbles in a space where a specimen is to be held is suppressed, and therefore, it is possible to detect a specific substance with high measurement accuracy.

### BRIEF DESCRIPTION OF DRAWINGS

FIG. 1A is a perspective view showing an embodiment of a biosensor.
FIG. **1B** is a perspective exploded view of the biosensor shown in FIG. **1A****.**
FIG. **2A** is a plan view of the biosensor shown in FIG. **1A****.**
FIG. **2B** is a cross-sectional view of the biosensor taken along line **2B-2B** of FIG. **2A****.**
FIG. **2C** is another cross-sectional view of the biosensor taken along line **2C-2C** of FIG. **2A****.**
FIG. **2D** is a plan view of the biosensor shown in FIG. **1A** from which a cover plate has been removed.
FIG. **2E** is a plan view of the biosensor shown in FIG. **1A** from which a cover plate and first and second reagent layers have been removed.
FIG. **2F** is a plan view of the biosensor shown in FIG. **1A** from which a cover plate, first and second reagent layers and a spacer plate have been removed.
FIG. **3** is a block diagram showing the configuration of a measurement device.
FIG. **4** is a perspective view showing dropping of a specimen onto a biosensor.
FIG. **5A** is a schematic diagram illustrating introduction of a specimen into the first measurement space with a partition.
FIG. **5B** is a schematic diagram illustrating introduction of a specimen into the first measurement space with a partition.
FIG. **5C** is a schematic diagram illustrating introduction of a specimen into the first measurement space with a partition.
FIG. **5D** is a schematic diagram illustrating introduction of a specimen into the first measurement space with a partition.
FIG. **5E** is a schematic diagram illustrating introduction of a specimen into the first measurement space with a partition.
FIG. **6A** is a schematic diagram illustrating introduction of a specimen into the first measurement space without a partition.
FIG. **6B** is a schematic diagram illustrating introduction of a specimen into the first measurement space without a partition.
FIG. **6C** is a schematic diagram illustrating introduction of a specimen into the first measurement space without a partition.
FIG. **6D** is a schematic diagram illustrating introduction of a specimen into the first measurement space without a partition.
FIG. **6E** is a schematic diagram illustrating introduction of a specimen into the first measurement space without a partition.
FIG. **7A** is a schematic diagram showing another form of the biosensor.
FIG. **7B** is a schematic diagram showing another form of the biosensor.
FIG. **7C** is a schematic diagram showing another form of the biosensor.
FIG. **7D** is a schematic diagram showing another form of the biosensor.
FIG. **7E** is a schematic diagram showing another form of the biosensor.
FIG. **7F** is a schematic diagram showing another form of the biosensor.
FIG. **8A** is a plan view showing a cover plate for use in another form of the biosensor.
FIG. **8B** is a plan view showing an electrode layer for use in another form of the biosensor.
FIG. **8C** is a plan view showing a base plate for use in another form of the biosensor.
FIG. **9A** is a plan view showing a second electrode layer for use in another form of the biosensor.
FIG. **9B** is a plan view showing a spacer plate for use in another form of the biosensor.
FIG. **9C** is a plan view showing a first electrode layer for use in another form of the biosensor.
FIG. **10A** is a plan view showing a spacer plate for use in another form of the biosensor.
FIG. **10B** is a plan view showing a partition for use in another form of the biosensor.

### DESCRIPTION OF EMBODIMENTS

A biosensor including microchannels moves a specimen using capillary force. In measuring the concentration of a specific substance using the biosensor with high accuracy, it is preferred that the same measurement conditions are reproduced for every measurement. The inventors of the present application closely studied the process in a biosensor, from introduction of a specimen to electrochemical measurement, and found that when the space for holding the specimen is large the capillary force largely acts along the periphery of the space and therefore the specimen moves faster in the peripheral part than in the central part of the space, so that the central part of the space is not sufficiently filled with the specimen and bubbles can be formed in some cases. When such bubbles are formed, for example, the space is not thoroughly filled with the specimen and therefore the amount of the specimen to be measured can vary. When a reagent is provided in the space, part of the reagent is covered with bubbles and fails to react with the specimen, so that the reaction amount of the reagent can vary. These factors can affect the measurement accuracy.

For example, electrochemically measuring the value of hemoglobin A1c (hereinafter, referred to as "HbA1c") using a biosensor is now discussed. The HbA1c value is a test value represented by the proportion of hemoglobin bonded with sugar (HbA1c) to the hemoglobin in red blood cells (referred to as "Hb"). Since the HbA1c value reflects the average blood sugar level in the last 1-2 months, the HbA1c value is unlikely to be affected by food eaten before the test and can be used as a more precise index for management of diabetes as compared with the blood glucose level. The HbA1c value cannot be determined without determining the concentration (amount) of HbA1c and the concentration (amount) of Hb. Herein, Hb means the total Hb that includes HbA1c and other derivatives. However, the concentration of HbA1c is low in general and, therefore, it is particularly difficult to electrochemically measure the concentration of HbA1c. Thus, conventionally, mainly the HbA1c value is measured by optical spectroscopy.

Measurement of the HbA1c value with the use of an electrochemical measurement method can be realized by increasing the amount of the specimen used as much as possible and increasing the detection area in the electrodes such that the detection accuracy can be increased. To this end, it is necessary to enlarge the space for holding the specimen. However, as previously described, if the space for holding the specimen is enlarged, bubbles are likely to be formed, and decrease in measurement accuracy can occur.

In view of the above-described problems, the inventors of the present application arrived at a biosensor which has a novel configuration. Outlines of the biosensor of the present disclosure are as follows.

### [Item 1]

A biosensor comprising:
a base plate having a major surface;
a cover plate having an entrance section including at least one entrance opening;
a first measurement space located between the base plate and the cover plate, the first measurement space being in communication with the entrance opening of the cover plate;
at least one partition located in the first measurement space so as to divide part of the first measurement space into two or more portions;
at least one electrode layer located between the base plate or the cover plate and the first measurement space, the electrode layer including a first electrode pair including a working electrode and a counter electrode, part of the first electrode pair being located in the two or more portions of the first measurement space; and
a first reagent layer containing a first reagent capable of reacting with a specimen, the first reagent layer being located in the two or more portions of the first measurement space.

### [Item 2]

The biosensor as set forth in Item 1, wherein the first measurement space and the at least one partition are elongated in the first direction, and the two or more portions of the measurement space have generally equal widths in a second direction that is perpendicular to the first direction.

### [Item 3]

The biosensor as set forth in Item 2, further comprising a spacer plate having a first opening which defines the first measurement space, the spacer plate being located between the base plate and the cover plate.

### [Item 4]

The biosensor as set forth in Item 3, wherein the at least one partition is located in the first opening of the spacer plate, one end of the partition being connected with a periphery of the first opening.

### [Item 5]

The biosensor as set forth in Item 3, wherein the partition is a single partition.

### [Item 6]

The biosensor as set forth in Item 3, wherein the partition is two partitions.

### [Item 7]

The biosensor as set forth in any of Items 3 to 6, wherein at least part of the entrance section of the cover plate overlaps another part of the first opening of the spacer plate.

### [Item 8]

The biosensor as set forth in any of Items 3 to 6, wherein at least part of the entrance section of the cover plate overlaps each of the two or more portions of the first opening of the spacer plate.

### [Item 9]

The biosensor as set forth in any of Items 3 to 8 wherein, in a plan view, the other end of the at least one partition is tapered.

### [Item 10]

The biosensor as set forth in any of Items 3 to 8 wherein, in a plan view, the other end of the at least one partition has a semicircular or curved shape.

### [Item 11]

11. The biosensor as set forth in any of Items 3 to 10 wherein, in a plan view, one end of the at least one partition has a curved portion in a part connecting to the periphery of the first opening.

### [Item 12]

The biosensor as set forth in Item 3, wherein the base plate, the spacer plate and the cover plate have a longitudinal direction in the first direction.

### [Item 13]

The biosensor as set forth in Item 12, wherein a length in the first direction of the at least one partition is greater than a width in the second direction of the base plate, the spacer plate and the cover plate.

### [Item 14]

The biosensor as set forth in any of Items 3 to 13, wherein
the electrode layer is a single electrode layer, and
the electrode layer is located between the base plate and the spacer plate.

### [Item 15]

The biosensor as set forth in any of Items 3 to 13, wherein
the electrode layer is a single electrode layer, and
the electrode layer is located between the cover plate and the spacer plate.

### [Item 16]

The biosensor as set forth in any of Items 3 to 13, wherein
the at least one electrode layer includes a first electrode layer and a second electrode layer,
the first electrode layer is located between the base plate and the spacer plate,
the second electrode layer is located between the cover plate and the spacer plate,
the first electrode layer includes one of the working electrode and the counter electrode, and
the second electrode layer includes the other of the working electrode and the counter electrode.

### [Item 17]

The biosensor as set forth in any of Items 3 to 16, further comprising a second reagent layer containing a second reagent capable of reacting with the specimen,
wherein the spacer plate has a second opening which is independent of the first opening and which defines a second measurement space,
the electrode layer further includes a second electrode pair including a working electrode and a counter electrode,
part of the second electrode pair is located in the second opening,
the second reagent layer is located in the second opening, and
another part of the entrance section overlaps the second opening.

### [Item 18]

The biosensor as set forth in any of Items 3 to 17, wherein the cover plate has a first evacuation hole in communication with the first opening of the spacer plate, the first evacuation hole and the entrance section being located at opposite ends in the first direction of the first opening.

### [Item 19]

The biosensor as set forth in Item 17, wherein
the cover plate has a first evacuation hole in communication with the first opening of the spacer plate and a second evacuation hole in communication with the second opening,
the first evacuation hole and the entrance section are located at opposite ends in the first direction of the first opening, and
the second evacuation hole and the entrance section are located at opposite ends in the first direction of the second opening.

### [Item 20]

The biosensor as set forth in any of Items 1 to 19, wherein the first reagent layer is capable of reacting with an identical substance derived from the specimen.

### [Item 21]

The biosensor as set forth in any of Items 1 to 20, wherein
the specimen includes hemoglobin separated from a red blood cell,
the hemoglobin includes hemoglobin A1c, and
the first reagent is capable of specifically reacting with the hemoglobin A1c or a substance derived from the hemoglobin A1c.

### [Item 22]

The biosensor as set forth in Item 17 or 19, wherein
the specimen includes hemoglobin separated from a red blood cell,
the hemoglobin includes hemoglobin A1c,
the first reagent is capable of specifically reacting with the hemoglobin A1c or a substance derived from the hemoglobin A1c, and
the second reagent is capable of reacting with the hemoglobin.

Hereinafter, an embodiment of the biosensor of the present disclosure is described in detail with reference to the drawings. The biosensor of the present disclosure is capable of electrochemically detecting and/or quantifying two different specific substances contained in a specimen. For example, a form of the biosensor for detecting the first substance and the second substance contained in a specimen is described. Particularly when the detection sensitivities of two or more substances contained in a specimen are different, the biosensor of the present disclosure is capable of detecting even a specific substance of relatively-low detection sensitivity with increased sensitivity. In the embodiment described in the following section, a biosensor for electrochemically measuring the concentrations of HbA1c and Hb in a specimen of pretreated blood as the first substance and the second substance will be described as an example. However, the biosensor of the present disclosure can also be suitably used for detection of other substances. As will be described later, the biosensor of the present disclosure can be suitably used when a relatively-large space is filled with a specimen for detecting and/or quantifying a specific substance with high accuracy.

The embodiment described in the following section is merely exemplary. The present invention is not limited to the embodiment. In the description of the embodiment in the following section, for the sake of understandability, or for the sake of avoiding unnecessary repetition, reference numerals are sometimes provided in the drawings so that repetitious descriptions can be omitted, or elements which are not mentioned in the description are sometimes not provided with reference numerals.

### < Configuration of biosensor >

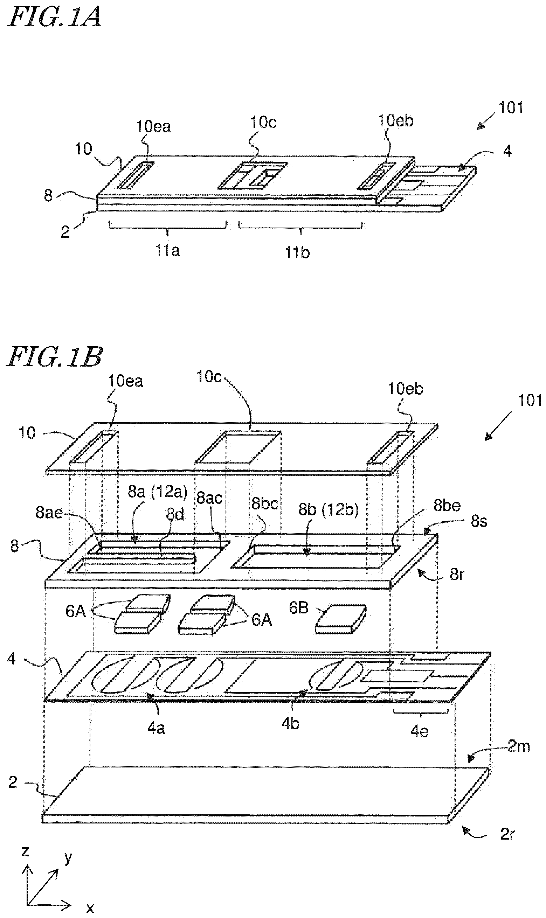

An embodiment of the biosensor of the present disclosure is described. FIG. **1A** and FIG. **1B** are a perspective view and a perspective exploded view of the biosensor **101** of the present embodiment. The biosensor **101** at least includes a base plate **2,** a cover plate **10,** a first measurement space **12a** located between the base plate **2** and the cover plate **10** for detecting a specific substance contained in a specimen, a partition **8d,** an electrode layer **4** located between the base plate **2** or the cover plate **10** and the first measurement space **12a,** and a first reagent layer **6A.** In the form shown in FIG. **1A** and FIG. **1B****,** the biosensor **101** includes a base plate **2,** an electrode layer **4,** first and second reagent layers **6A, 6B,** a spacer plate **8** and a cover plate **10.** As shown in FIG. **1B****,** the base plate **2,** the spacer plate **8** and the cover plate **10** have, for example, a strip shape which has a longitudinal direction along x direction (first direction) and of which the length in x direction is greater than the length in y direction (width direction or second direction).

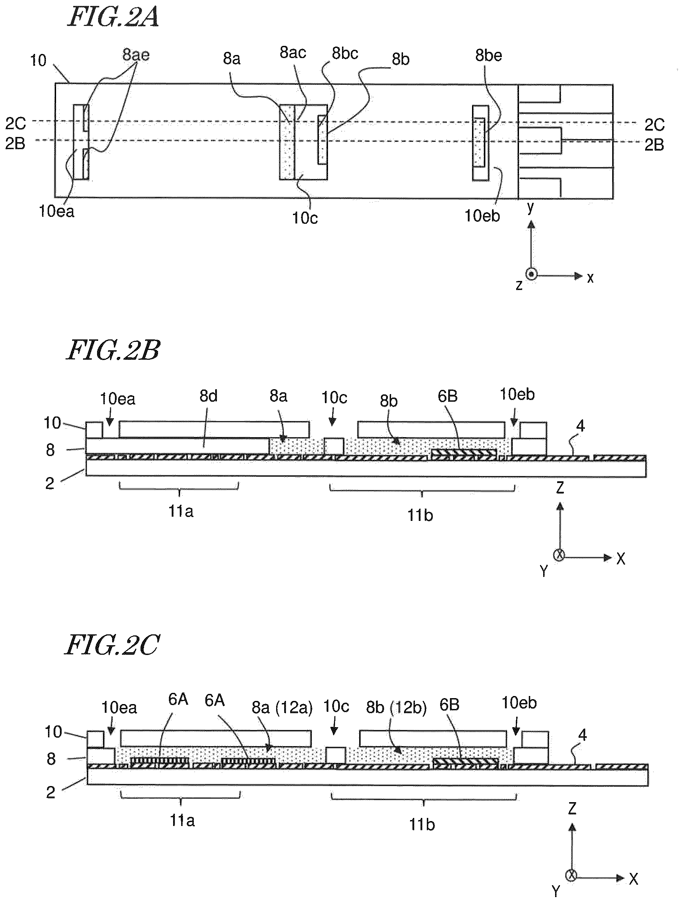

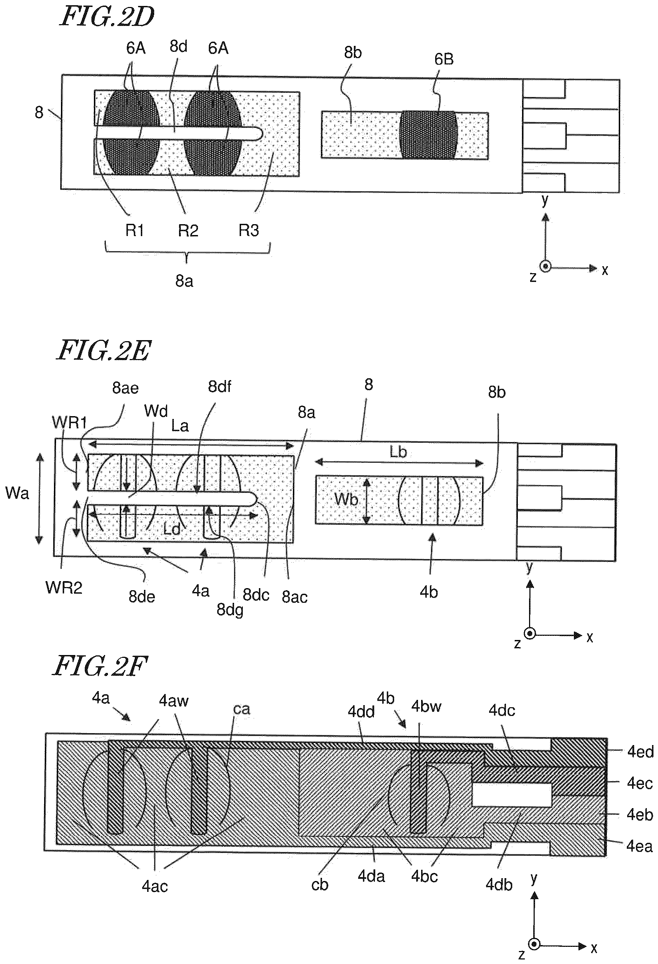

FIG. **2A** is a plan view of the biosensor **101.** FIG. **2B** and FIG. **2C** are cross-sectional views of the biosensor **101** taken along line **2B-2B** and line **2C-2C** of FIG. **2A****.** FIG. **2D,** FIG. **2E** and FIG. **2F** are, respectively, a plan view of the biosensor **101** from which the cover plate **10** has been removed, a plan view of the biosensor **101** from which the cover plate **10** and the first and second reagent layers **6A, 6B** have been removed, and a plan view of the biosensor **101** from which the components at higher levels than the spacer plate **8** have been removed. The configuration of the biosensor **101** is described in detail with reference to these drawings.

The base plate **2** supports the entire structure of the biosensor **101.** The base plate **2** has a major surface **2m** and a major surface **2r** and has a strip shape as previously described. The major surfaces of the plate mean large major surfaces where the plate serves as a substrate for supporting components.

The biosensor **101** includes at least one electrode layer arranged so as to face the first measurement space **12a** for detecting a specific substance of a specimen. In the present embodiment, as will be described later, the first measurement space **12a** is defined by the spacer plate **8,** and the biosensor **101** includes a single electrode layer **4** located between the base plate **2** and the spacer plate **8.** The electrode layer **4** is located on the major surface **2m** of the base plate **2.** For the sake of understandability, in FIG. **2F****,** electrically-continuous parts of the electrode layer **4** are shaded. The electrode layer **4** at least includes a first electrode pair **4a** and a second electrode pair **4b.** The first electrode pair **4a** and the second electrode pair **4b** are used for detecting the first substance and the second substance, which are different substances in a specimen. In the present embodiment, the first substance is HbA1c, and the second substance is Hb.

As shown in FIG. **2F****,** the first electrode pair **4a** includes working electrodes **4aw** and counter electrodes **4ac.** In the present embodiment, the first electrode pair **4a** includes two working electrodes **4aw** and three counter electrodes **4ac.** The two working electrodes **4aw** are coupled with a terminal **4ed** via a wire portion **4dd.** The three counter electrodes **4ac** are coupled with a terminal **4ea** via a wire portion **4da.** In x direction that is the longitudinal direction of the base plate **2,** the working electrodes **4aw** and the counter electrodes **4ac** are alternately arranged.

Likewise, the second electrode pair **4b** includes a working electrode **4bw** and a counter electrodes **4bc.** In the present embodiment, the second electrode pair **4b** includes a single working electrode **4bw** and two counter electrodes **4bc.** The working electrode **4bw** is coupled with a terminal **4ec** via a wire portion **4dc.** The two counter electrodes **4bc** are coupled with a terminal **4eb** via a wire portion **4db.** In the longitudinal direction of the base plate **2,** the working electrode **4bw** and the counter electrodes **4bc** are alternately arranged. A pair of counter electrodes **4ac,** between which each of the working electrodes **4aw** is interposed, have cuts **ca** in the shape of an elliptical arc. Likewise, a pair of counter electrodes **4bc,** between which the working electrode **4bw** is interposed, have cuts **cb** in the shape of an elliptical arc.

In the present embodiment, the configuration of the above-described electrodes in the electrode layer **4** is realized by patterning a metal film continuously covering an approximate entirety of the major surface **2m** of the base plate **2.**

The spacer plate **8** is provided on the electrode layer **4.** In the present embodiment, the spacer plate **8** includes a first opening **8a** and a second opening **8b.** The length in the longitudinal direction of the spacer plate **8** is smaller than the length of the base plate **2.** Therefore, the terminals **4ea-4ed** of the electrode layer **4** are not covered with the spacer plate **8** but exposed. The first opening **8a** and the second opening **8b** define the first measurement space **12a** and the second measurement space **12b** for measuring different specific substances of a specimen.

The first opening **8a** and the second opening **8b** are through holes reaching two major surfaces **8s, 8r** of the spacer plate **8.** The first opening **8a** and the second opening **8b** are independent spaces and are not in communication with each other. The spacer plate **8** is interposed between the base plate **2** and the cover plate **10** such that the first opening **8a** and the second opening **8b** serve as reaction chambers where a specimen is to be held and the electrical change in the specimen which can be caused by the reaction of the specimen with the first and second reagent layers **6A, 6B** is to be detected.

The first opening **8a** and the second opening **8b** each have, for example, a rectangular shape which is longitudinal along the longitudinal direction of the spacer plate **8** and are arranged along the longitudinal direction of the spacer plate **8.** Thus, in the vicinity of the center of the spacer plate **8,** the edge **8ac** of the first opening **8a** is close to the edge **8bc** of the second opening **8b.** The edge **8ae** of the first opening **8a** and the edge **8be** of the second opening **8b** are respectively close to the opposite ends in the longitudinal direction of the spacer plate **8.**

In the present embodiment, the first substance in the specimen held in the first opening **8a** is detected with high sensitivity. That is, the volume of the reaction chamber for detecting the first substance is greater than the volume of the reaction chamber for detecting the second substance. Thus, preferably, the area of the first opening **8a** is greater than the area of the second opening **8b.** In the present embodiment, as shown in FIG. **2E****,** for example, La>Lb holds and Wa>Wb also holds where La and Lb are the lengths in x direction (the longitudinal direction) of the first opening **8a** and the second opening **8b** and Wa and Wb are the widths in y direction (the direction perpendicular to the longitudinal direction) of the first opening **8a** and the second opening **8b.** This enables the amount of the specimen which can be held in the first opening **8a** to be greater than the amount of the specimen which can be held in the second opening **8b.** La is, for example, 15 mm to 25 mm and, in one example, about 18.6 mm.

The size of the first opening **8a** and the second opening **8b** can be determined according to the amount of the specimen which is required in consideration of the concentration of the first substance and the second substance in the specimen, the detection sensitivity in a detection method used, etc. When capillary force is used to introduce the specimen into the first opening **8a** and the second opening **8b,** the spacer plate **8** has such a thickness (z direction) that the capillary force can act on the specimen. For example, the thickness of the spacer plate **8** is 0.01 mm to 1 mm and, in one example, 0.15 mm.

In the form shown in FIG. **1A** and FIG. **1B****,** the spacer plate **8** includes at least one partition located in the first opening **8a.** An end of the at least one partition is connected with the periphery of the first opening **8a** such that part of the first measurement space **12a** defined by the first opening **8a** is divided into two or more portions. In the present embodiment, the spacer plate **8** includes a partition **8d.** The partition **8d** is elongated in x direction. The longitudinal end **8de** of the partition **8d** is connected with the edge **8ae** of the first opening **8a.**

The length in x direction of the partition **8d,** Ld, is shorter than the length in x direction of the first opening **8a,** La. The width in y direction of the partition **8d,** Wd, is sufficiently shorter than the width in y direction of the first opening **8a,** Wa.

The partition **8d** divides the first opening **8a** in y direction into the first portion **R1** and the second portion **R2.** The first portion **R1** and the second portion **R2** are each in communication with the third portion **R3** in which the partition **8d** is not present. The width WR1 of the first portion **R1** and the width WR2 of the second portion are generally equal. Each of WR1 and WR2 is, for example, 2.5 mm to 5.5 mm and, in one example, about 3.25 mm.

As will be described later, in the third portion **R3** of the first opening **8a,** an entrance opening **10c** of the cover plate **10** is provided. Meanwhile, in the first portion **R1** and the second portion **R2,** the first reagent layer **6A** is provided. Movement of the specimen in the biosensor **101** is mainly realized by capillary force. Since the capillary force depends on the wettability (surface tension) of wall surfaces surrounding the first opening **8a** with respect to the specimen that is liquid, when the space is partitioned into small portions, greater capillary force acts in the partitioned portions of the space, and a region can be further reduced in which the capillary force is unlikely to act and the moving speed of the specimen is small. Thus, in introducing the specimen, bubbles are unlikely to be formed. The partition **8d** also functions as a pillar provided in the first opening **8a** and supports the cover plate **10.**

In the present embodiment, the end **8dc** of the partition **8d** has a semicircular shape in a plan view. The end **8dc** may have a curved shape, such as arc shape, elliptical shape, etc., rather than the semicircular shape. The wall surface **8df** and the wall surface **8dg** of the partition **8d** are continuously connected at the end **8dc** without having a boundary therebetween. Since the tip end of the partition **8d** has such a shape in a plan view, the specimen introduced from the third portion **R3** diverges and smoothly flows into the first portion **R1** and the second portion **R2** without causing turbulence.

As shown in FIG. **2E****,** the spacer plate **8** is provided on the electrode layer **4** and, therefore, in the first opening **8a** and the second opening **8b,** part of the first electrode pair **4a** and part of the second electrode pair **4b** are exposed. More specifically, in each of the first portion **R1** and the second portion **R2** of the first opening **8a,** part of the first electrode pair **4a** is exposed. The electrical or electrochemical change in the specimen held in the first opening **8a** and the second opening **8b** can be detected by the first electrode pair **4a** and the second electrode pair **4b.** The total of the lengths of the boundaries between the working electrodes **4aw** and the counter electrodes **4ac** of the first electrode pair **4a** is 4×WR1+4×WR2. In the second opening **8b,** the total of the lengths of the boundaries between the working electrode **4bw** and the counter electrodes **4bc** of the second electrode pair **4b** is 2×Wb. The total of the lengths of the boundaries between the working electrodes and the counter electrodes is greater in the first electrode pair **4a** than in the second electrode pair **4b,** so that the detection sensitivity of the first electrode pair **4a** is higher.

The first reagent layer **6A** and the second reagent layer **6B** each contain a first reagent and a second reagent. The first reagent and the second reagent are capable of respectively reacting with the first substance and the second substance of the specimen, or with substances derived from the first substance and the second substance by a pretreatment, thereby causing an electrically-detectable change in the specimen. In the present embodiment, the first reagent is fructosyl peptide oxidase which is a detection enzyme capable of specifically reacting with fructosyl valyl histidine produced by pretreating Hb1Ac. The first reagent is immobilized to the first reagent layer. The second reagent is potassium ferricyanide which is a mediator capable of reacting with all of Hb including Hb1Ac. The second reagent is immobilized to the second reagent layer.

The first reagent layer **6A** and the second reagent layer **6B** are respectively provided in the first portion **R1** and the second portion **R2** of the first opening **8a** and the second opening **8b** of the spacer plate **8.** More specifically, the first reagent layer **6A** is located above the vicinity of the boundaries between the working electrodes **4aw** and the counter electrodes **4ac** of two first electrode pairs **4a** exposed in the first portion **R1** and the second portion **R2** of the first opening **8a,** and the second reagent layer **6B** is located above the vicinity of the boundaries between the working electrode **4bw** and the counter electrodes **4bc** of the second electrode pair **4b.** The first reagent layer **6A** is separately provided in two regions of the first portion **R1** and the second portion **R2** of the first opening **8a,** and the first reagent layer **6A** provided in the two regions is capable of reacting with an identical substance derived from the specimen.

In the present embodiment, when the materials of the first reagent layer **6A** and the second reagent layer **6B** are dropped from above the electrode layer **4,** the circular cuts **ca, cb** provided in the counter electrodes define the regions where the materials spread. Thus, the amount of the first reagent layer **6A** and the amount of the second reagent layer **6B** which are present in the vicinity of the boundaries between the working electrodes and the counter electrodes are constant, so that the variation of the electric current in detecting the first substance and the second substance among the biosensors can be suppressed.

The cover plate **10** is provided on the spacer plate **8.** The cover plate **10** has an entrance section which includes at least one entrance opening. In the present embodiment, the entrance section has a single entrance opening **10c.** As clearly shown in FIG. **2A** and FIG. **2B****,** the entrance opening **10c** overlaps part of the third portion **R3** of the first opening **8a** and part of the second opening **8b.** More specifically, the edge **8ac** at a longitudinal end of the first opening **8a** and the edge **8bc** at a longitudinal end of the second opening **8b** are present in the entrance opening **10c.** Thus, the entrance opening **10c** is in communication with the third portion **R3** of the first opening **8a** and the second opening **8b.** When the specimen is dropped to the entrance opening **10c,** the specimen flows into the third portion **R3** of the first opening **8a** and the second opening **8b.**

In the present embodiment, the cover plate **10** may further include a first evacuation hole **10ea** and a second evacuation hole **10eb.** The first evacuation hole **10ea** and the second evacuation hole **10eb** overlap part of the first opening **8a** and part of the second opening **8b,** respectively, and the edge **8ae** of the first opening **8a** and the edge **8be** of the second opening **8b** are present in the first evacuation hole **10ea** and the second evacuation hole **10eb,** respectively. Since the first evacuation hole **10ea** and the second evacuation hole **10eb** are provided, when the biosensor is configured such that capillary force acts on the first opening **8a** and the second opening **8b,** the air in these spaces is evacuated from the first evacuation hole **10ea** and the second evacuation hole **10eb** as the specimen is drawn into these spaces. Thus, it is possible to introduce the specimen into the first opening **8a** and the second opening **8b** by capillary force.

By stacking up the above-described components, the first cell **11a** which includes the entrance opening **10c,** the first opening **8a** and the first evacuation hole **10ea** and which is configured to detect the first substance and the second cell **11b** which has the entrance opening **10c,** the second opening **8b** and the second evacuation hole **10eb** and which is configured to detect the second substance are formed as shown in FIG. **1A** and FIG. **2A****.**

The base plate **2,** the spacer plate **8** and the cover plate **10** are made of an insulative material. For example, various resin materials, for example, PET (polyethylene terephthalate) resin or the like, can be used. Alternatively, these plates may be made of an inorganic material, such as glass. The electrode layer **4** is made of an electrically-conductive material. For example, the electrode layer **4** is formed by patterning a film of a metal such as palladium with a laser beam. The base plate **2,** the electrode layer **4,** the spacer plate **8** and the cover plate **10** are joined together using, for example, a thermosetting adhesive agent.

### < Configuration of measurement device >

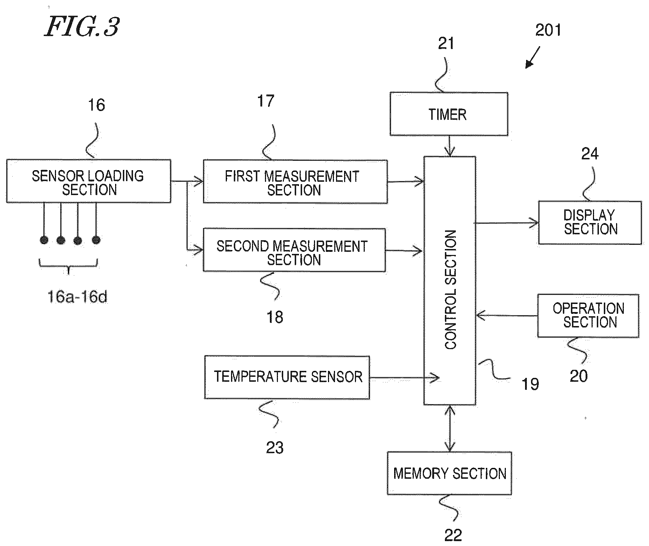

FIG. **3** shows a configuration example of a measurement device **201** loaded with the biosensor **101** for measurement of the first substance and the second substance of a specimen. The measurement device **201** includes a sensor loading section **16,** a first measurement section **17,** a second measurement section **18** and a control section **19.** The sensor loading section **16** includes connectors **16a-16d** which are in contact with the terminals **4ea-4ed** of the biosensor **101** and which are electrically coupled with the first measurement section **17** and the second measurement section **18.** The first measurement section **17** and the second measurement section **18** apply predetermined voltages to the first electrode pair **4a** and the second electrode pair **4b,** respectively, via the connectors **16a-16d** and the terminals **4ea-4ed** and measure current values. The measured current values are output to the control section **19.**

The control section **19** determines the concentrations of the first substance and the second substance from the current values (or voltage values) received from the first measurement section **17** and the second measurement section **18.** For example, the control section **19** has in its memory a table where current values and concentration values are related or a function of the current value and the concentration value and calculates the concentrations of the first substance and the second substance based on the table or function. In the present embodiment, the first substance is HbA1c, and the second substance is Hb. The control section **19** calculates the proportion of HbA1c to Hb from the current values or the concentration values and determines the HbA1c value. The measurement device **201** may further include an operation section **20,** a timer **21,** a memory section **22,** a temperature sensor **23** and a display section **24** and may refer to the information from the temperature sensor **23** for correcting the HbA1c value. The corrected HbA1c value is stored in the memory section **22** together with the information regarding the time from the timer **21** and is meanwhile displayed on the display section **24.** The control section **19** performs processes such as measurement, displaying, storing measurement results in the memory, etc., based on instructions entered by an operator from the operation section **20.**

The control section **19** of the measurement device **201** includes an arithmetic unit, such as microcomputer, and a memory section. In the memory section, a program is stored which stipulates the procedure of the measurement. The arithmetic unit executes the program, thereby measuring the concentrations of the first substance and the second substance. The first measurement section **17** and the second measurement section **18** include a power supply circuit for generating a predetermined voltage and an ammeter for measuring the current value. The measured current value is converted to, for example, a digital signal and subjected to the above-described processes in the control section **19.** The display section **24** may be a liquid crystal display device, an organic EL display device, or the like.

### < Measurement of HbA1c with biosensor 101 and measurement device 201 >

Hereinafter, a specific measurement procedure of HbA1c with the use of the biosensor **101** and the measurement device **201** is described.

### (1) Pretreatment on specimen

Firstly, a blood specimen sampled from an examinee is pretreated. Specifically, a hemolytic agent such as surfactants is added to the sampled blood specimen such that Hb is eluted from red blood cells of the blood specimen.

Then, protease, which is a degrading enzyme, is added to the blood specimen containing the eluted Hb, whereby Hb is degraded. As a result of the degradation, HbA1c in the Hb produces fructosyl valyl histidine. Hereinafter, the pretreated blood specimen is simply referred to as "specimen".

### (2) Electrochemical reaction in biosensor 101

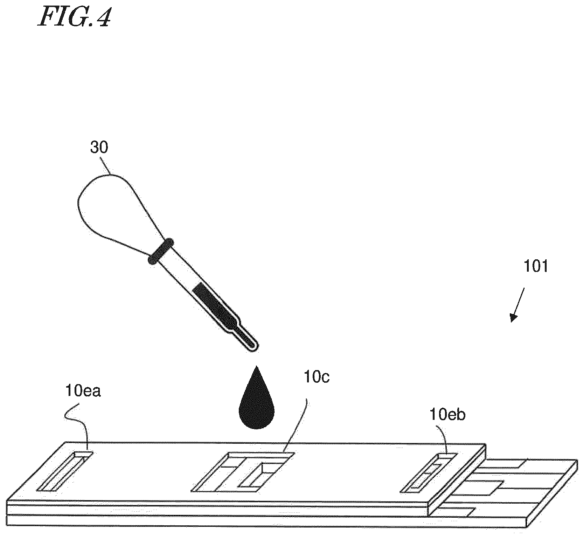

The biosensor **101** is put into the measurement device **201.** The specimen is drawn into a dropper **30** and then dropped onto the vicinity of the entrance opening **10c** of the biosensor **101** as shown in FIG. **4****.** The specimen placed on the vicinity of the entrance opening **10c** is drawn in from the entrance opening **10c** by capillary force and introduced into the first opening **8a** and the second opening **8b** concurrently, i.e., in parallel.

Fructosyl valyl histidine in the specimen introduced into the first opening **8a** reacts with fructosyl peptide oxidase, which is the first reagent contained in the first reagent layer **6A,** and produces hydrogen peroxide. The hydrogen peroxide produced in this reaction causes a reaction on the working electrodes **4aw** so that an electric current which depends on the amount of the hydrogen peroxide flows between the working electrodes **4aw** and the counter electrodes **4ac** of the first electrode pair **4a.** Since fructosyl valyl histidine is derived from HbA1c, the current value varies depending on the amount of HbA1c in the specimen.

Hb in the specimen introduced into the second opening **8b** and potassium ferricyanide which is the second reagent contained in the second reagent layer **6B** cause oxidation/reduction reactions. This transfer of electrons is detected as an electric current flowing between the working electrode **4bw** and the counter electrodes **4bc** of the second electrode pair **4b,** whereby the current value which depends on the amount of Hb can be detected.

### (3) Measurement with measurement device 201

For example, the measurement device **201** applies a voltage of 0.1 V to 0.4 V between the working electrodes **4aw** and the counter electrodes **4ac** of the first electrode pair **4a** for 5 seconds to 10 seconds and measures the magnitude of an electric current flowing between the working electrodes **4aw** and the counter electrodes **4ac.** Likewise, the measurement device **201** applies a voltage of 0.1 V to 0.4 V between the working electrode **4bw** and the counter electrodes **4bc** of the second electrode pair **4b** for 5 seconds to 10 seconds and measures the magnitude of an electric current flowing between the working electrode **4bw** and the counter electrodes **4bc.**

The current values measured by the first measurement section **17** and the second measurement section **18** are equivalent to the amount of HbA1c and the amount of Hb. The measurement device **201** uses these current values to determine the HbA1c value.

### < Flow of specimen in biosensor >

According to a biosensor of the present embodiment, the partition **8d** provided in the first opening **8a** can suppress formation of bubbles in filling the first opening **8a** with a specimen. Hereinafter, the effects achieved by provision of the partition **8d** are described with reference to the drawings.

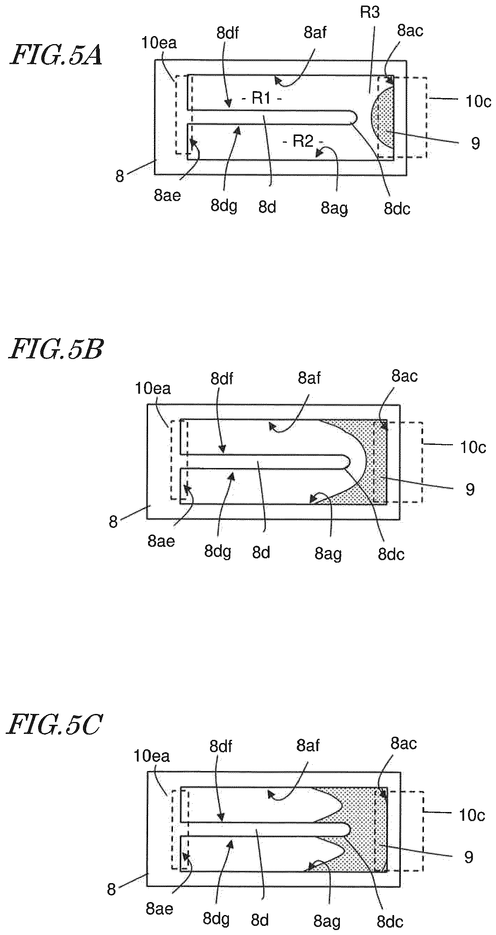

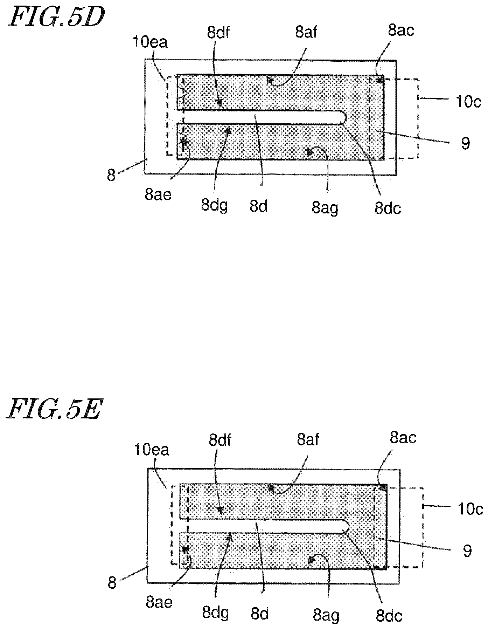

FIG. **5A,** FIG. **5B,** FIG. **5C****,** FIG. **5D** and FIG. **5E** are schematic diagrams showing the states of a specimen moving in the first opening **8a** when the specimen is introduced from the entrance opening **10c** in the biosensor **101** of the present embodiment. As previously described, introduction of the specimen into the first opening **8a** and the second opening **8b** is realized by capillary force. The capillary force relates to the wettability of wall surfaces which define a minute space with respect to liquid. In a region which is closer to the wall surfaces and which has a greater number of neighboring wall surfaces, greater capillary force acts.

As shown in FIG. **5A****,** a specimen **9** dropped from the entrance opening **10c** first moves along the edge **8ac** of the first opening **8a** and reach the wall surfaces **8af**, **8ag** extending in the longitudinal direction, and then, the specimen **9** moves fast along the wall surfaces **8af**, **8ag**. Thus, as shown in FIG. **5B****,** a part of the specimen **9** near the center of the edge **8ac** moves toward the edge **8ae** slower than other parts of the specimen **9** near the wall surfaces **8af, 8ag.** However, as shown in FIG. **5C****,** when the central part of the specimen **9** reaches the end **8dc** of the partition **8d,** it comes into contact with the wall surfaces **8df, 8dg** of the partition **8d,** so that strong capillary force acts, and the specimen **9** moves fast along the wall surfaces **8df, 8dg** of the partition **8d.** As a result, in the first portion **R1** and the second portion **R2** divided by the partition **8d,** movement of the specimen **9** is largely delayed in a smaller region and, as shown in FIG. **5D****,** the specimen **9** as a whole moves toward the edge **8ae** of the first opening **8a.** As a result, as shown in FIG. **5E****,** the specimen **9** reaches the edge **8ae** while the entirety of the first opening **8a** is filled with the specimen **9.** In this way, the first opening **8a** is filled with the specimen **9** without bubbles left in the first opening **8a.**

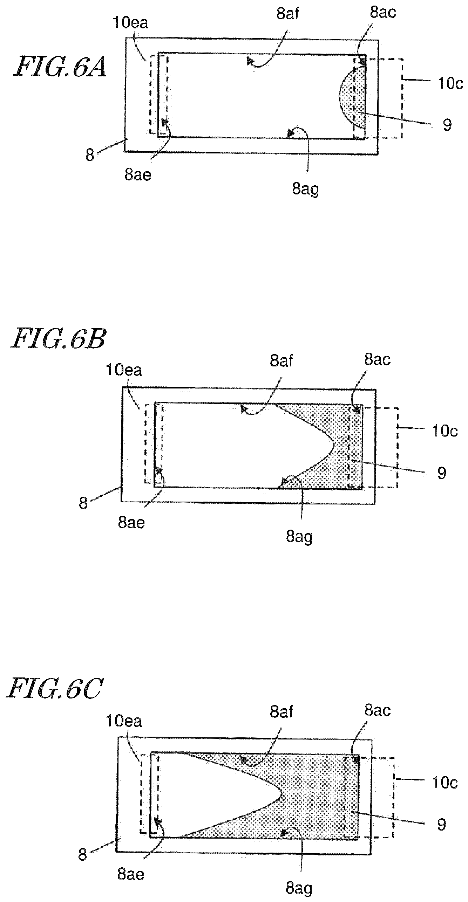

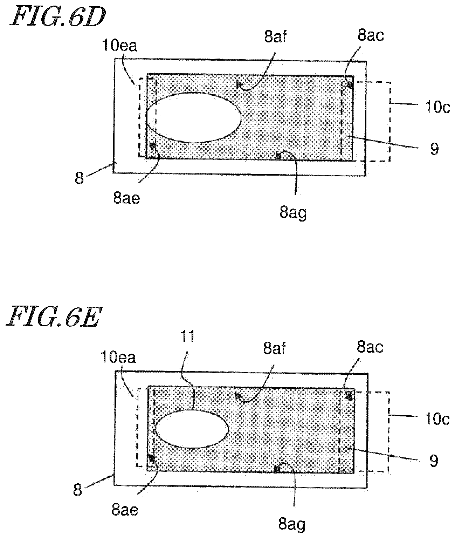

FIG. **6A,** FIG. **6B,** FIG. **6C****,** FIG. **6D** and FIG. **6E** are schematic diagrams illustrating movement of the specimen **9** in the first opening **8a** in the case where the partition **8d** is not provided in the first opening **8a.** As shown in FIG. **6A****,** a specimen **9** dropped from the entrance opening **10c** first moves along the edge **8ac** of the first opening **8a** and reach the wall surfaces **8af, 8ag** extending in the longitudinal direction, and then, the specimen **9** moves fast along the wall surfaces **8af, 8ag.** Thus, as shown in FIG. **6B****,** a part of the specimen **9** near the center of the edge **8ac** moves toward the edge **8ae** slower than other parts of the specimen **9** near the wall surfaces **8af, 8ag.** As shown in FIG. **6C****,** when the partition **8d** is not provided, a part of the specimen **9** near the center in the transverse direction of the first opening **8a** always moves slower than other parts of the specimen **9** near the wall surfaces **8af, 8ag.** As a result, as shown in FIG. **6D****,** when the specimen **9** reaches the edge **8ae** near the wall surfaces **8af, 8ag,** a part of the specimen **9** near the center in the transverse direction is far distant from the edge **8ae.** The specimen **9** which has reached the edge **8ae** near the wall surfaces **8af**, **8ag** then moves along the edge **8ae.** As a result, as shown in FIG. **6E****,** the first evacuation hole **10ea** is covered with the specimen **9.** Therefore, a portion of the first opening **10a** which is not filled with the specimen **9** appears as a bubble **11.** The specimen **9** covering the first evacuation hole **10ea** is unlikely to move due to surface tension which is attributed to contact with the edge **8ae.** Thus, the bubble **11** is unlikely to be evacuated from the first evacuation hole **10ea.**

### < Effects >

According to the biosensor of the present disclosure, the partition **8d** is provided in the first opening **8a.** Therefore, when the specimen is introduced as previously described, no bubble is formed in the first opening **8a** that serves as a reaction chamber, and the reaction chamber can be filled with the specimen. Thus, the amount of the specimen to be measured is unlikely to vary. Also, since the reagent is not partially covered with a bubble, the variation in the reaction amount of the reagent can be suppressed. Thus, according to the biosensor of the present disclosure, accurate measurement can be performed.

The partition **8d** also functions as a supporting member provided in the first opening **8a.** Therefore, when the area of the first opening **8a** is increased, the partition **8d** prevents the cover plate **10** from sagging toward the first opening **8a** side. This prevents the volume of the first opening **8a** from decreasing due to the sagging cover plate **10,** so that a constant, accurate amount of the specimen can be measured.

In producing the biosensor **101,** the process of stacking up the base plate, the electrode layer **4,** the spacer plate **8,** the first reagent layer **6A** and the second reagent layer **6B,** and the cover plate **10** and bonding together the spacer plate **8,** the electrode layer **4** and the cover plate **10** by thermocompression bonding with heat and force applied from above the cover plate **10** is employed in some cases. In such a process, if the cover plate **10** deforms as previously described, there is a probability that the first reagent layer **6A** provided in the first opening **8a** and the cover plate **10** come into contact with each other, and the heat transfers from the cover plate **10** to the first reagent layer **6A,** so that the first reagent contained in the first reagent layer **6A** can degenerate or decompose due to the heat. According to the biosensor of the present disclosure, the partition **8d** prevents sagging of the cover plate **10** as previously described and, therefore, transfer of the heat to the first reagent layer **6A** due to such deformation of the cover plate **10** can be suppressed. Thus, occurrence of defective products in production of the biosensor **101** can be suppressed, and the production yield can be improved.

Since the entrance opening of the cover plate overlaps the first opening and the second opening, the specimen can be introduced into the first opening and the second opening in which the electrodes are provided without providing a branched channel for guiding the specimen to the reaction chamber. That is, the biosensor does not have a branched channel. Thus, by increasing the area of the first opening and/or the second opening, the amount of the specimen used for measurement can be increased, and the length of the boundary between the working electrode and the counter electrode can be increased, so that the detection sensitivity of the biosensor can be increased. Since, by introducing the specimen from the entrance section, the specimen can be concurrently introduced in parallel into the first opening and the second opening provided in the spacer plate, the time for filling the first opening and the second opening with the specimen before the start of measurement can be reduced.

In the first opening and the second opening, the specimen is brought into a reaction with the first substance and a reaction with the second substance, so that it is possible to detect or quantify two types of substances in the specimen using the first electrode pair and the second electrode pair. Since the first opening and the second opening are independent, one of the measurement of the first substance and the measurement of the second substance does not affect the other, and the two types of substances can be independently detected with high accuracy.

Since the first opening and the second opening are independent, the size of each of these openings can be arbitrarily set, and the amount of the specimen used can be independently adjusted. Thus, the amount of the specimen used can be changed according to the concentration and detection sensitivity of a substance to be detected in the specimen, and the measurement can be carried out with appropriate sensitivity. For example, by making the area of the first opening greater than the area of the second opening, the detection accuracy of a substance which is to be detected using the first substance can be improved. Further, by increasing the area of the first opening, the length of the boundary between the working electrode and the counter electrode in the first electrode pair can be increased, and the detection sensitivity can be further increased. Since the first opening and the second opening are independent, in introducing the specimen into the first opening and the second opening using capillary force, the capillary force which acts on each of the openings can be independently adjusted.

Since the entrance section is provided in the cover plate, the amount of the dropped specimen can be increased such that the first opening and the second opening can be filled with the specimen in a short time period, and the measurement time can be shortened. Also, even if the area of the first electrode pair and the second electrode pair for the detection is increased, a sufficient amount of the specimen can be brought into contact with the electrode pairs in a short time period. Thus, the detection sensitivity can be improved.

Since the first evacuation hole and the second evacuation hole are provided in the first opening and the second opening, respectively, the specimen can be introduced into the first opening and the second opening using capillary force. Thus, the first opening and the second opening can be stably and assuredly filled with the specimen.

### < Other forms >

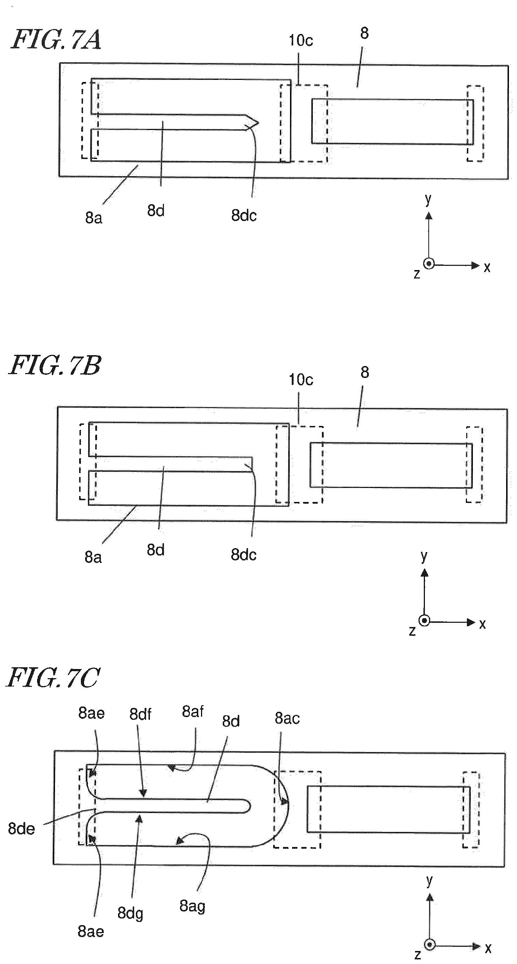

Various modifications to the biosensor of the present disclosure are possible. As shown in FIG. **7A** and FIG. **7B****,** the end **8dc** of the partition **8d** may have such a tapered shape that, in a plan view, the width on the edge **8ac** side of the first opening **8a** is narrower. Alternatively, the partition **8d** may have an end face which faces the edge **8ac** of the first opening **8a.**

As shown in FIG. **7C****,** the edge **8ae** of the first opening **8a** and the wall surfaces **8df, 8dg** of the partition **8d,** in a plan view, do not have clear boundaries but may be connected by curved surfaces. That is, the end **8de** of the partition **8d** may have curved portions in parts connecting to the periphery of the first opening **8a.** Although not shown, likewise, the edge **8ae** of the first opening **8a** and the wall surfaces **8af, 8ag** of the first opening **8a,** in a plan view, do not have clear boundaries but may be connected by curved surfaces. When two wall surfaces are connected at a right angle in a plan view, there is a probability that a liquid spreading from one of the wall surfaces to the other will enclose bubbles due to the effects of the wettability of the wall surfaces. In this case, connecting the two wall surfaces by a curved surface can hinder formation of bubbles.

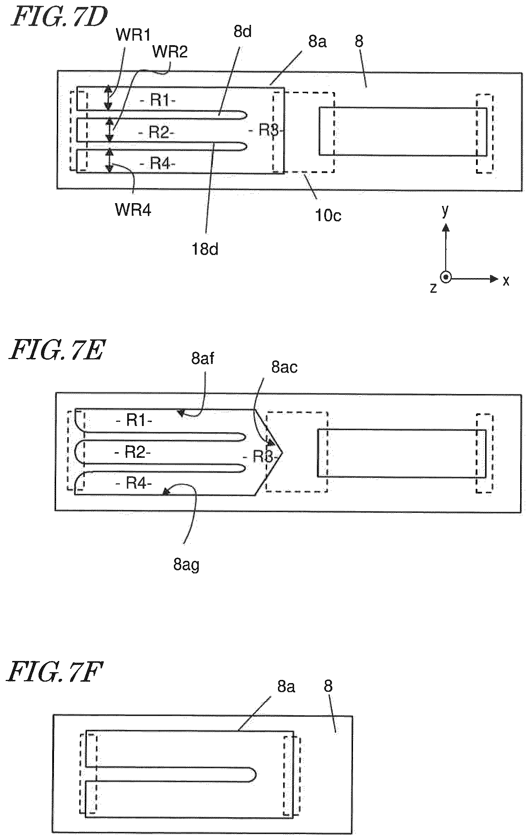

As shown in FIG. **7D****,** the spacer plate **8** may include two or more partitions provided in the first opening **8a.** For example, the spacer plate **8** may include a partition **8d** and a partition **18d.** The partitions **8d, 18d** are each elongated in x direction that is the longitudinal direction and are arranged in y direction that is the transverse direction, such that the partitions **8d, 18d** divide part of the first opening **8a** into three portions, the first portion **R1,** the second portion **R2** and the fourth portion **R4.** The third portion **R3** is located in the entrance opening **10c** likewise as in the above-described embodiment. The fourth portion **R4** is in communication with the third portion **R3.** The width in y direction of the fourth portion, WR4, is generally equal to the width WR1 of the first portion **R1** and to the width WR2 of the second portion **R2.**

The specimen introduced from the entrance opening 10c flows from the third portion **R3** into the first portion **R1,** the second portion **R2** and the fourth portion **R4.** Since the width in the transverse direction of the first opening **8a** is divided by the two partitions **8d, 18d** into three parts, formation of bubbles is further suppressed.

As shown in FIG. **7E****,** the edge **8ac** of the first opening **8a** may have such a tapered shape that, in a plan view, the width on the second opening **8b** side is narrower. In such a form, as compared with a case where the wall surfaces **8af, 8ag** and the edge **8ac** of the first opening **8a** are connected at a right angle in a plan view, enclosure of bubbles at the corners is unlikely to occur. As the area of the third portion **R3** decreases, the introduced specimen is allowed to flow faster into the first portion **R1,** the second portion **R2** and the fourth portion **R4.**

In the above-described embodiment, the biosensor of the present disclosure has been described with an example where two types of specific substances are to be detected, although the biosensor of the present disclosure may be configured to detect only one type of specific substance. As shown in FIG. **7F****,** the biosensor of the present disclosure may include a spacer plate **8** which includes a first opening **8a** but does not include a second opening **8b.**

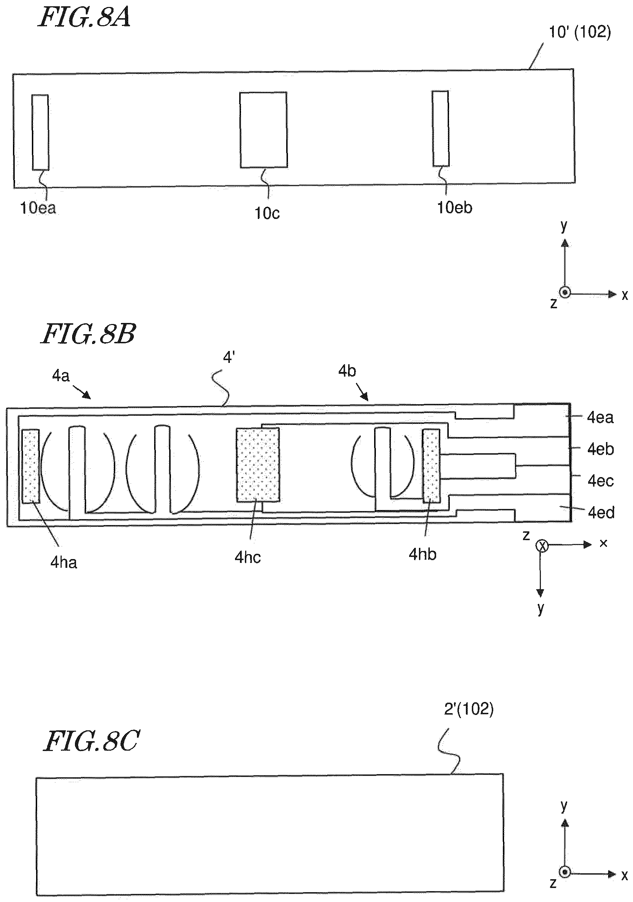

So long as the biosensor includes an electrode layer which faces the first measurement space **12a** as previously described, the position of the electrode layer is not limited to the above-described embodiment. FIG. **8A,** FIG. **8B** and FIG. **8C** are plan views of a cover plate **10',** an electrode layer **4'** and a base plate **2'**, respectively, in a biosensor **102** where the electrode layer is located between the cover plate and the spacer plate. In FIG. **8B****,** the electrode layer **4'** is viewed from the base plate **2'** side. The electrode layer **4'** is different from the electrode layer 4 in that the electrode layer **4'** has openings **4hc, 4ha** and **4hb** corresponding to the entrance opening **10c** the first evacuation hole **10ea** and the second evacuation hole **10eb** provided in the cover plate **10'**. The electrode layer **4'** is, for example, printed on a surface of the cover plate **10'** which faces the spacer plate **8** and is located between the cover plate **10'** and the spacer plate **8.** Due to this configuration, the first electrode pair **4a** and the second electrode pair **4b** of the electrode layer **4'** face the first opening **8a** and the second opening **8b** of the spacer plate **8.** The length in x direction of the cover plate **10'** is greater than that of the base plate **2'** such that the terminals **4ea, 4eb, 4ec, 4ed** of the electrode layer **4'** are exposed.

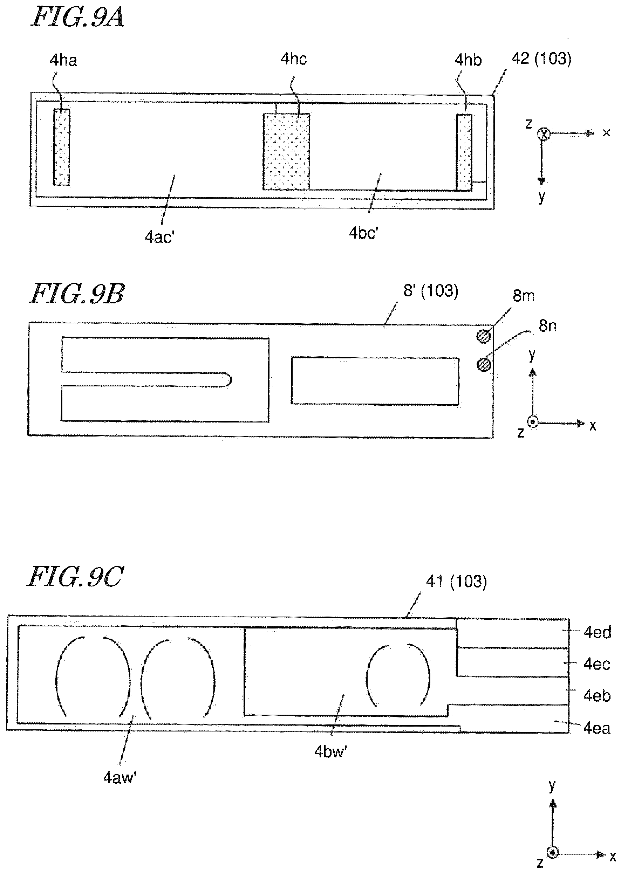

The biosensor may include two electrode layers. One of the electrode layers may include a working electrode while the other includes a counter electrode. FIG. **9A,** FIG. **9B** and FIG. **9C** are plan views of a second electrode layer **42,** a spacer plate **8'** and a first electrode layer **41** of a biosensor **103.** In FIG. **9A****,** the second electrode layer **42** is viewed from the base plate **2** side. The first electrode layer **41** includes, for example, terminals **4ea, 4eb, 4ec, 4ed** and working electrodes **4aw'**, **4bw'** connected with the terminals **4ea, 4eb.** The second electrode layer **42** includes counter electrodes **4ac'**, **4bc'.** The first electrode layer **41** is located between the base plate **2** and the spacer plate **8'** . The second electrode layer **42** is located between the spacer plate **8'** and the cover plate **10.**

The spacer plate **8'** includes electrically-conductive vias **8m, 8n** which are respectively in contact with the counter electrodes **4ac'**, **4bc'** of the second electrode layer **42** and the terminals **4ec, 4ed** of the first electrode layer **41** for electrically coupling the counter electrodes **4ac', 4bc'** and the terminals **4ec, 4ed.**

In the biosensor **103** also, the working electrode **4aw** and the counter electrode **4ac** of the first electrode face the first measurement space **12a** defined by the first opening **8a,** and the working electrode **4bw** and the counter electrode **4bc** of the first electrode face the second measurement space **12b** defined by the second opening **8b.** Thus, the same effects as those of the above-described embodiment can be achieved.

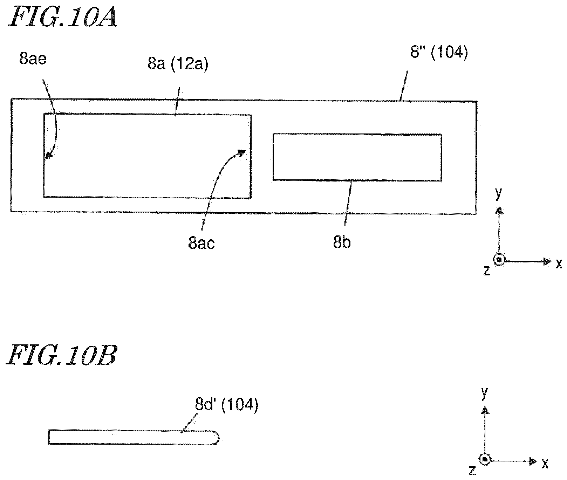

In the above-described embodiment, the partition is an integral part of the spacer plate, although the partition may be separate from the spacer plate. FIG. **10A** and FIG. **10B** are plan views of a spacer plate **8''** and a partition **8d'** included in a biosensor **104.** The spacer plate **8''** includes a first opening **8a** which defines the first measurement space **12a** and a second opening **8b** which defines the second measurement space **12b.** The partition **8d'** is an independent constituent which is separate from the spacer plate **8''**. For example, the partition **8d'** is arranged in the first opening **8a** of the spacer plate **8''** so as to be in contact with the edge **8ae** and is supported by the base plate **2.** Even in such a form, the biosensor **104** can achieve the same effects as those of the above-described embodiment.

Although not shown, the partition **8d'** may be arranged in the first opening so as to be in contact with the edge **8ac.** In this case, the partition **8d'** may be arranged such that at least part of the entrance opening **10c** of the cover plate **10** overlaps two portions of the first opening **8a** of the spacer plate **8''** which are divided by the partition **8d'**.

Alternatively, the biosensor of the present disclosure can be embodied by appropriately combining the above-described embodiment and alternative forms. The number of openings independently provided in the spacer plate **8** is not limited to 1 or 2 but may be 3 or more. The specimen is not limited to blood or a liquid prepared by pretreating blood. The first substance and the second substance are not limited to Hb1Ac and Hb. A biosensor for detection of various substances can be realized.

### INDUSTRIAL APPLICABILITY

The biosensor of the present disclosure can be suitably used for a biosensor for use in various industrial fields including the fields of medical and clinical examinations and pharmaceutical fields.

### REFERENCE SIGNS LIST

**2, 2'** base plate
**4, 4'** electrode layer
**4a** first electrode pair
**4ac** counter electrode
**4aw** working electrode
**4b** second electrode pair
**4bc** counter electrode
**4bw** working electrode
**4da, 4db, 4dc, 4dd** wire portion
**4ea, 4eb, 4ec, 4ed** terminal
**4ha, 4hb, 4hc** opening
**6A** first reagent layer
**6B** second reagent layer
**8, 8'** spacer plate
**8a** first opening
**8ac, 8ae, 8bc, 8be, 8dc, 8de** edge
**8af, 8ag, 8df, 8dg** wall surface
**8b** second opening
**8d** partition
**8m, 8n** electrically-conductive via
**9** specimen
**10, 10'** cover plate
**10a** first opening
**10c** entrance opening
**10ea** first evacuation hole
**10eb** second evacuation hole
**11** bubble
**11a** first cell
**11b** second cell
**12a** first measurement space
**12b** second measurement space
**16** sensor loading section
**16a-16d** connector
**17** first measurement section
**18** second measurement section
**18d** partition
**19** control section
**20** operation section
**21** timer
**22** memory section
**23** temperature sensor
**24** display section
**30** dropper
**41** first electrode layer
**42** second electrode layer
**101, 102, 103, 104** biosensor
**201** measurement device
**R1** first portion
**R2** second portion
**R3** third portion
**R4** fourth portion
**ca** cut
**cb** cut

## Claims

1. A biosensor comprising:
a base plate having a major surface;
a cover plate having an entrance section including at least one entrance opening;
a first measurement space located between the base plate and the cover plate, the first measurement space being in communication with the entrance opening of the cover plate;
at least one partition located in the first measurement space so as to divide part of the first measurement space into two or more portions;
at least one electrode layer located between the base plate or the cover plate and the first measurement space, the electrode layer including a first electrode pair including a working electrode and a counter electrode, part of the first electrode pair being located in the two or more portions of the first measurement space; and
a first reagent layer containing a first reagent capable of reacting with a specimen, the first reagent layer being located in the two or more portions of the first measurement space.

2. The biosensor of claim 1, wherein the first measurement space and the at least one partition are elongated in the first direction, and the two or more portions of the first measurement space have generally equal widths in a second direction that is perpendicular to the first direction.

3. The biosensor of claim 2, further comprising a spacer plate having a first opening which defines the first measurement space, the spacer plate being located between the base plate and the cover plate.

4. The biosensor of claim 3, wherein the at least one partition is located in the first opening of the spacer plate, one end of the partition being connected with a periphery of the first opening.

5. The biosensor of claim 3, wherein the at least one partition is a single partition.

6. The biosensor of claim 3, wherein the at least one partition is two or more partitions.

7. The biosensor of any of claims 3 to 6, wherein at least part of the entrance section of the cover plate overlaps another part of the first opening of the spacer plate.

8. The biosensor of any of claims 3 to 6, wherein at least part of the entrance section of the cover plate overlaps each of the two or more portions of the first opening of the spacer plate.

9. The biosensor of any of claims 3 to 8 wherein, in a plan view, the other end of the at least one partition is tapered.

10. The biosensor of any of claims 3 to 8 wherein, in a plan view, the other end of the at least one partition has a semicircular or curved shape.

11. The biosensor of any of claims 3 to 10 wherein, in a plan view, one end of the at least one partition has a curved portion in a part connecting to the periphery of the first opening.

12. The biosensor of claim 3, wherein the base plate, the spacer plate and the cover plate have a longitudinal direction in the first direction.

13. The biosensor of claim 12, wherein a length in the first direction of the at least one partition is greater than a width in the second direction of the base plate, the spacer plate and the cover plate.

14. The biosensor of any of claims 3 to 13, wherein
the electrode layer is a single electrode layer, and the electrode layer is located between the base plate and the spacer plate.

15. The biosensor of any of claims 3 to 13, wherein
the electrode layer is a single electrode layer, and
the electrode layer is located between the cover plate and the spacer plate.

16. The biosensor of any of claims 3 to 13, wherein
the at least one electrode layer includes a first electrode layer and a second electrode layer,
the first electrode layer is located between the base plate and the spacer plate,
the second electrode layer is located between the cover plate and the spacer plate,
the first electrode layer includes one of the working electrode and the counter electrode, and
the second electrode layer includes the other of the working electrode and the counter electrode.

17. The biosensor of any of claims 3 to 16, further comprising a second reagent layer containing a second reagent capable of reacting with the specimen,
wherein the spacer plate has a second opening which is independent of the first opening and which defines a second measurement space,
the electrode layer further includes a second electrode pair including a working electrode and a counter electrode,
part of the second electrode pair is located in the second opening,
the second reagent layer is located in the second opening, and
another part of the entrance section overlaps the second opening.

18. The biosensor of any of claims 3 to 17, wherein the cover plate has a first evacuation hole in communication with the first opening of the spacer plate, the first evacuation hole and the entrance section being located at opposite ends in the first direction of the first opening.

19. The biosensor of claim 17, wherein
the cover plate has a first evacuation hole in communication with the first opening of the spacer plate and a second evacuation hole in communication with the second opening,
the first evacuation hole and the entrance section are located at opposite ends in the first direction of the first opening, and
the second evacuation hole and the entrance section are located at opposite ends in the first direction of the second opening.

20. The biosensor of any of claims 1 to 19, wherein the first reagent layer is capable of reacting with an identical substance derived from the specimen.

21. The biosensor of any of claims 1 to 20, wherein
the specimen includes hemoglobin separated from a red blood cell,
the hemoglobin includes hemoglobin A1c, and
the first reagent is capable of specifically reacting with the hemoglobin A1c or a substance derived from the hemoglobin A1c.

22. The biosensor of claim 17 or 19, wherein
the specimen includes hemoglobin separated from a red blood cell,
the hemoglobin includes hemoglobin A1c,
the first reagent is capable of specifically reacting with the hemoglobin A1c or a substance derived from the hemoglobin A1c, and
the second reagent is capable of reacting with the hemoglobin.
